# FASCICULE DE BREVET EUROPEEN

(11) **EP 1 472 563 B1**
(45) Date de publication et mention de la délivrance du brevet: **04.10.2006**
(21) Numéro de dépôt: 02799823.6
(22) Date de dépôt: 18.12.2002
(51) Int. Cl.: G02B 23/04, G02B 23/18, G02B 17/06

(54) **INSTRUMENT D'OPTIQUE D'OBSERVATION DEPUIS UN SATELLITE, A DEUX TELESCOPES**
SATELLITENGESTÜTZTES OPTISCHES BEOBACHTUNGSINSTRUMENT MIT ZWEI TELESKOPEN
OPTICAL INSTRUMENT FOR OBSERVATION FROM A SATELLITE, WITH TWO TELESCOPES

(30) Priorité: 07.02.2002 FR 0201534
(43) Date de publication de la demande: 03.11.2004
(73) Titulaire: EADS ASTRIUM SAS, 31402 Toulouse Cedex 4 (FR)
(72) Inventeur: SAFA, Frédéric, F-31400 Toulouse (FR)
(74) Mandataire: Bérogin, Francis
(86) Numéro de dépôt international: PCT/FR2002/004432
(87) Numéro de publication internationale: WO 2003/067305

(56) Documents cités:
- WO-A-98/28641
- US-A- 3 402 977
- US-A- 5 208 654
- US-A- 5 485 306
- US-A- 5 905 591
- US-B1- 6 185 037

## Description

La présente invention concerne les instruments d'optique destinés à être utilisés sur des satellites et permettant d'observer simultanément ou quasi-simultanément dans deux directions angulairement séparées, typiquement de plusieurs dizaines de degrés. On peut citer, à titre d'exemples de telles applications :
- l'observation de ta terre à partir de satellites en orbite basse, en mode stéréo. Dans ce cas l'instrument doit prendre deux images de la même scène sous deux directions de visée typiquement écartées de 30 à 45 degrés.. La prise d'image en stéréo permet de restituer le profil d'altitude du sol et l'image tridimensionnelle de la terre.
- diverses observations scientifiques qui nécessitent de balayer le ciel en observant simultanément dans deux directions différentes ; des satellites d'astrométrie comportant un capteur d'étoiles basé sur ce principe existent déjà.

Pour remplir ces besoins l'instrument doit comprendre deux voies de mesure devant fonctionner simultanément ou quasi-simultanément. Pour réduire le coût et la complexité d'ensemble on fait généralement en sorte qu'un même télescope soit commun aux deux voies de mesure avec un plan focal dédoublé ou on rend le plan focal commun avec un télescope dédoublé.

De tels instruments d'observation sont à haute résolution. Pour cela il faut un télescope de diamètre élevé pour le spatial (supérieur à 1 mètre) et un plan focal de grandes dimensions et complexe, comprenant plusieurs dizaines ou centaines de détecteurs matriciels et de chaînes vidéo rapides. On arrive souvent à un nombre de détecteurs juxtaposés tel que le nombre total de sites photosensibles dépasse 50000 x 50000.

La conception des satellites dans le domaine spatial a pour souci permanent de minimiser la masse, la puissance consommée et l'encombrement du satellite. Le coût global d'un satellite et sa faisabilité sont directement fonction de ces trois paramètres. A l'heure actuelle le sous-ensemble de détection constitue l'élément prépondérant de l'instrument du point de vue coût, complexité, masse, puissance, calendrier de développement et essais.

On connaît déjà des instruments permettant d'observer dans deux directions différentes avec un même plan focal. Deux concepts sont utilisés. L'un d'eux comporte deux télescopes et une lame semi-transparente qui permet de superposer les plans images en sortie. Cela se traduit par une perte de 50% du flux. L'autre comporte un seul télescope. Deux miroirs d'entrée placés devant le télescope et angulairement décalés se partagent la pupille d'entrée. Cela se traduit par une perte de 50% du flux que l'on collecterait avec deux télescopes séparés. Le second concept présente l'avantage d'avoir également un télescope commun, mais les contraintes de masse, d'encombrement et de stabilité sur le rassembleur de faisceaux rendent le concept très difficile à réaliser pour les grands diamètres. Et ce concept induit en plus une dégradation de la résolution d'un facteur 2 dans la direction de séparation.

D'autres systèmes sont connus par US 3,402,977 et US 5,905,591.

L'invention vise notamment à fournir un instrument permettant d'obtenir deux ou plusieurs voies de mesures avec des télescopes séparés et un plan focal commun en respectant complètement la co-planéité des fronts d'onde des deux télescopes avec le plan focal commun sans perte de flux, avec une perte réduite de champ angulaire.

Dans ce but l'invention propose notamment un instrument d'optique destiné à être utilisé sur satellite et permettant d'observer simultanément ou quasi-simultanément dans deux directions angulairement séparées, comprenant :
- au moins deux télescopes ayant des directions d'observation angulairement écartées, ayant chacun une pupille de sortie ou une pupille intermédiaire réelle et accessible et des champs images respectifs plans ou superposables, de largeur au moins 3 fois, avantageusement au moins 5 fois, supérieure à celle de la pupille dans une direction déterminée ;
des moyens optiques placés à la pupille de sortie ou intermédiaire et disposés de façon à former les champs images dans un plan focal commun en recouvrement sauf dans des zones latérales dont la largeur est sensiblement celle de la pupille de sortie des télescopes ; et dans le plan focal commun, un ensemble de plusieurs détecteurs matriciels, disposés et orientés sur la zone de superposition des champs images des télescopes dans le front d'onde.

On voit que l'invention utilise le fait que la pupille de sortie a des dimensions qui peuvent être très réduites comparées à celles de l'image dans le plan focal , souvent inférieures au dixième dans le sens du décalage. De plus le décalage peut dans certains cas être mis à profit dans un but d'identification, en particulier en cas de défilement de l'espace objet dans le sens du décalage.

Les moyens optiques seront généralement constitués de deux miroirs, situés sur les pupilles de sortie des deux télescopes ou dans leur voisinage, orientés pour superposer effectivement les deux champs image en formant des fronts d'onde superposés.

Souvent l'instrument comportera deux trains de miroirs de renvoi plans, non nécessairement identiques, situés entre la sortie des télescopes et leurs pupilles de sortie respectives, ayant pour fonction de faciliter l'aménagement des télescopes sur la structure de l'instrument, ayant notamment pour fonction de rapprocher suffisamment les pupilles de sortie des deux télescopes tout en les maintenant disjointes.

La distance focale des télescopes dépasse largement 10 mètres en général. Dans des cas représentatifs en matière d'observation des étoiles, elle peut dépasser 40 mètres. Un train supplémentaire de miroirs de renvoi, pouvant être commun aux deux télescopes, est avantageusement disposé entre les pupilles de sorties et les champs image superposés pour faciliter l'aménagement mécanique de l'instrument.

Les télescopes peuvent être constitués de miroirs, de dioptres ou d'une combinaison des deux, optimisés chacun dans un champ étendu suffisamment grand, observant dans deux directions d'une valeur quelconque éventuellement ajustable par un aménagement mécanique adéquat des éléments optiques sur la structure de l'instrument, et conçus de sorte que les pupilles de sorties puissent être rendues voisines l'une de l'autre lorsque les champs images sont effectivement superposés.

Des filtres optiques, notamment des filtres de couleur, peuvent être disposés sur les chemins optiques séparés ou commun des télescopes. Un obturateur, de conception arbitraire, peut être placé sur une voie optique ou sur les deux pour désactiver l'une des voies de mesure ou les deux., dans des buts que l'on verra plus loin.

Pour augmenter la sensibilité et améliorer le rapport signal sur bruit, il est avantageux d'utiliser des détecteurs matriciels du type dispositifs à Transfert de Charges (CCD) et de faire fonctionner ces détecteurs en mode dit TDI compensant le défilement de la scène observée par chaque télescope ce qui implique que ces derniers aient la même distance focale. La distorsion optique des télescopes doit alors être minimisée pour permettre une fréquence de transfert des charges identique pour une partie ou pour l'ensemble des CCD.

Comme indiqué plus haut les deux applications principales (mais non les seules) sont l'observation de la terre à partir d'un satellite défilant et l'observation des étoiles. Ces applications conduisent à des particularités différentes de l'instrument ou du satellite qui le porte.

Dans le cas de l'observation de la terre, le défilement de la scène dans le plan focal est induit par le mouvement orbital ou des variations commandées d'attitude du satellite. Deux points de la terre sont observés sous deux angles différents avec un décalage temporel par un télescope, puis l'autre

Dans le cas d'un satellite_observant des objets célestes ou l'espace, le défilement de la scène dans le plan focal est induit par des variations de l'attitude du satellite, comme par exemple un mouvement de rotation autour d'un axe fixe dans l'espace inertiel ou lentement variable. Des moyens sont à prévoir pour identifier les objets.

Sur un tel satellite muni d'un instrument observant des objets ponctuels simultanément et continuellement à travers les deux télescopes, comprenant un plan focal intermédiaire réel et accessible pour au moins un premier des deux télescopes, il sera généralement prévu un dispositif permettant de reconnaître le télescope actif pour chaque objet détecté dans le plan focal commun, tel que :
- un ou plusieurs détecteurs matriciels supplémentaires disposés dans le plan focal intermédiaire du premier télescope, hors de la zone de recouvrement, et détectant systématiquement tous les objets qui traversent le champ commun,
- un diaphragme de champ disposé dans le plan focal intermédiaire du premier télescope de manière à délimiter physiquement le champ commun dans ce plan focal intermédiaire, et par conséquent à délimiter dans le plan focal final et commun le champ effectivement vu par le premier télescope ; un ou plusieurs détecteurs matriciels supplémentaires sont alors disposés dans le plan focal final, mais hors de la zone commune, de telle manière qu'ils ne soient pas actifs pour le premier télescope et que tout objet détecté dans le plan focal commun à travers le second télescope traverse obligatoirement l'un de ces détecteurs supplémentaires ; ces détecteurs supplémentaires suffisent à déterminer le télescope actif pour tout objet observé dans le champ commun, car l'objet sera détecté ou non par ces détecteurs selon qu'il est vu
ou non à travers le second télescope.

Un autre dispositif permettant de reconnaître le télescope actif pour chaque objet détecté dans le plan focal commun, sans qu'il soit nécessaire de disposer d'un plan focal intermédiaire. Ce dispositif suppose des miroirs de renvoi des deux voies orientés de manière à produire dans le plan focal commun une rotation d'image différentielle entre les deux voies. L'effet de cette rotation différentielle est de différencier les trajectoires des objets dans le champ commun en fonction du télescope actif.

Les caractéristiques ci-dessus ainsi que d'autres apparaîtront mieux à la lecture de la description qui suit de modes particuliers de réalisation de l'invention, donnés à titre d'exemples non limitatifs. La description se réfère aux dessins qui l'accompagnent, dans lesquels :
la figure 1 est un schéma de télescope utilisable pour mettre en oeuvre l'invention;
la figure 2 est un schéma optique d'un instrument conforme à un mode particulier de réalisation ;
la figure 3 est un schéma à grande échelle destiné à montrer le décalage des champs images;
la figure 4 est un schéma a grande échelle destiné à monter la disposition des sites dans un détecteur ;
la figure 5 montre la circulation des charges ;
les figures 6 et 7 montrent deux modes de détermination des objets observés par les deux télescopes.
La figure 8 est une vue en perspective montrant un exemple de télescope ;
La figure 9, similaire à la figure 8, montre la distribution des éléments optiques de deux télescopes ; et
La figure 10 est une vue en élévation de l'instrument complet.

Avant de décrire un instrument complet mettant en oeuvre l'invention, il est utile de donner des indications de nature plus générale sur les télescopes qui peuvent y être incorporés.

Un télescope destiné à l'espace présentera un diamètre d'entrée élevé, d'au moins 1 mètre, et une distance tocale qui atteint plusieurs dizaines de mètres. Un grand diamètre est nécessaire pour atteindre les résolutions requises. En effet, la résolution angulaire d'un télescope de diamètre D est de l'ordre de λ /D, où λ est la longueur d'onde. Pour atteindre une résolution inférieure à 50 cm au sol à partir d'un satellite à 700 km d'altitude, un diamètre d'au moins un mètre est nécessaire.

Par ailleurs la nature des détecteurs matriciels fixe un minimum au pas de répartition des pixels, qui est de l'ordre de 10 microns à l'heure actuelle. Pour ajuster le pas de répartition à la résolution du télescope, on sera généralement amené à adopter, pour un télescope d'observation des étoiles, une distance focale dépassant 40 mètres pour un diamètre d'entrée de l'ordre du mètre.

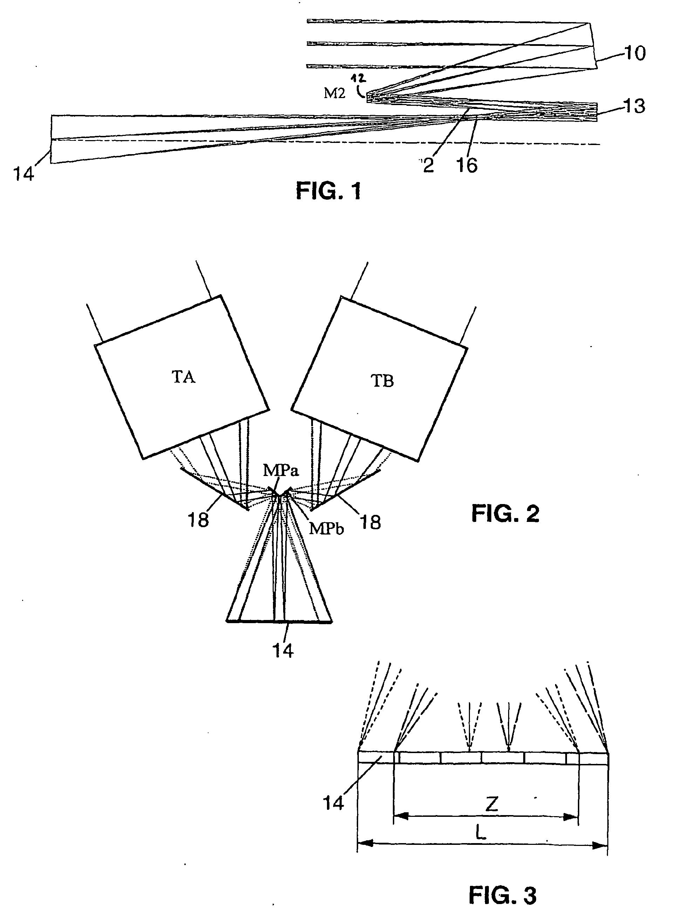

Enfin, avec un tel télescope, la dimension physique du plan focal est beaucoup plus élevée que celle des détecteurs actuellement disponibles, de sorte qu'on sera amené à placer au plan focal plusieurs dizaines ou même plusieurs centaines de détecteurs et de chaînes de traitement vidéo rapide. Par exemple, un instrument scientifique d'observation de la terre ayant un champ de 1° x 1° avec un diamètre d'entrée de 1 mètre a un plan focal de l'ordre de 850 x 850 millimètres et il pourra par exemple comporter 200 détecteurs de 60 x 60 millimètres. La figure 1 montre, à titre d'exemple, la constitution d'un télescope anastigmat de grande focale à 3 miroirs hors d'axe. Il comporte un miroir d'entrée 10, deux miroirs convexes 12 et concave 13 permettant de réduire l'encombrement du télescope et un plan focal 14.

L'intérêt de la figure 1 est de faire apparaître que la pupille de sortie 16 est réelle et de dimension très inférieure à celle du plan focal, pour un télescope de grande distance focale. Un tel télescope présente également un plan image intermédiaire 2, qui se place entre les miroirs 12 et 13 dans le cas de la figure 1.

La figure 2 montre une disposition de principe des composants d'un instrument mettant en oeuvre l'invention. II comporte deux télescopes, TA et TB dont les axes optiques présentent l'écart angulaire recherché. Tous les faisceaux de sortie sont étroits et s'appuient sur la pupille de sortie. On peut en conséquence ramener les fronts d'ondes des deux miroirs dans le même plan en plaçant, pour chaque télescope, un miroir pupillaire MPa, MPb de petite taille dans la zone de la pupille de sortie. Des miroirs plans 18 de renvoi peuvent être prévus si cela est nécessaire.

Dans cette disposition, il n'y a pas superposition complète des deux champs optiques de sortie, c'est à dire des deux champs pour lesquels la combinaison optique de chaque miroir a été calculée. La figure 3 montre que, dans le plan focal commun des 2 télescopes, le champ optique du télescope TB est décalé de celui du télescope TA d'une distance comparable au diamètre de la pupille de sortie. La zone de recouvrement Z (figure 3) s'étend sur la majeure partie de la largeur totale L. Suivant le cas, on placera des détecteurs sur toute la largeur L ou uniquement sur la distance Z, suivant qu'on utilise ou non la partie du plan focal sur laquelle se forme l'image fournie par un seul des télescopes.

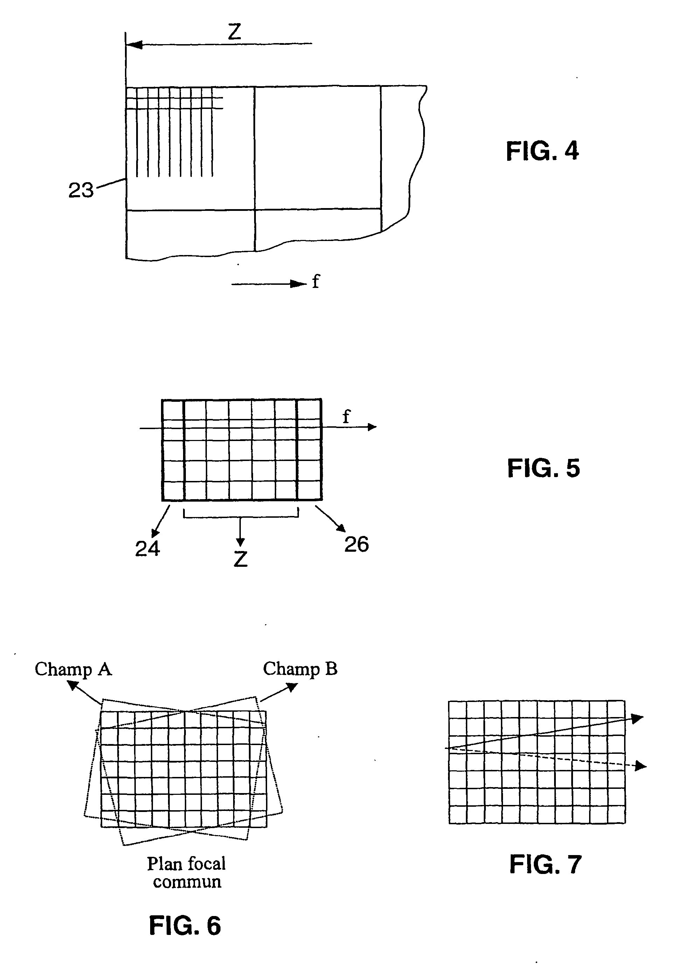

Comme on l'a indiqué plus haut, les dimensions importantes du champ image conduisent, à l'heure actuelle, à utiliser un réseau bi-dimensionnel de détecteurs matriciels, en général constitués par des détecteurs CCD 23, tel que celui dont un fragment est montré en figure 4. Ces détecteurs sont avantageusement utilisés en mode à intégration dans le temps, ou TDI, permettant d'améliorer le rapport signal / bruit lorsque la scène défile linéairement dans le plan focal, par exemple dans la direction de la flèche f (ce qui est notamment le cas des instruments balayant la voûte céleste ou observant la terre en mode dit lave-pont ou pushbroom). Les charges sont transférées par exemple dans le détecteur 23 à une fréquence définie par la vitesse locale de défilement de la scène dans la direction f. Si la distorsion optique est négligeable et pour des angles de champ θ dans la direction f suffisamment faible, la relation entre la position x, dans la direction f, et l'angle d'entrée θ est pratiquement x=F. θ, où F est la distance focale. Le nombre de colonnes de sites photosensibles sur lequel s'effectue l'intégration varie d'une application à une autre. Pour les instruments d'observation de la terre on utilisera habituellement quelques dizaine de colonnes. Certaines applications scientifiques en utilisent plusieurs milliers. En limitant la distorsion, la désynchronisation entre une vitesse de transfert des charges, qui est constante, et la vitesse de défilement de la scène (à l'origine d'un bougé d'image) peut être suffisamment réduite pour conserver une même fréquence de transfert pour tous les détecteurs du plan focal. Dans les cas extrêmes, des fréquences de transfert légèrement différentes seront utilisées pour les différents détecteurs, mais on cherchera toujours à avoir une désynchronisation négligeable sur un même détecteur 23.

Les images fournies par les deux télescopes se superposent sur le plan focal et il est en conséquence nécessaire, dans la plupart des cas, de prévoir des moyens permettant de différencier les deux voies de mesure. Ces moyens peuvent différer profondément suivant l'application de l'instrument.

Dans le cas de l'observation de la terre, les deux voies de mesure ne peuvent pas fonctionner simultanément car le champ objet est très structuré. II est nécessaire de disposer un obturateur pour chaque voie permettant de sélectionner la voie active. L'obturateur pourra être de dimensions faibles si on le place près de la pupille de sortie 16 ou dans un plan focal intermédiaire, tel que celui indiqué en 2 sur la figure 1.

Dans le cas des capteurs stellaires, où les objets observés sont quasi-ponctuels et discernables, les deux voies peuvent fonctionner simultanément en permanence et le problème est alors de discriminer les voies de mesure pour les objets observés dans le plan focal commun.

Deux méthodes sont notamment utilisables. Elles s'appliquent en particulier lorsque l'instrument balaye la voûte céleste d'un mouvement régulier et uniforme. Pour donner un exemple simple, on fera les hypothèses suivantes :
- le satellite est en rotation propre autour d'un axe qui est fixe dans un trièdre inertiel ou subit un mouvement lent en comparaison à la vitesse de rotation propre du satellite,
- les directions moyennes de visée (centre du champ) de chaque télescope sont perpendiculaires à l'axe de rotation du satellite, ce qui fait que les deux télescopes balayent une même bande sur le ciel, centrée sur le grand cercle perpendiculaire à l'axe de rotation.
- le champ de vue, et corrélativement le plan focal, sont rectangulaires.

### 1. Une première méthode utilise des détecteurs d'étoiles spécifiques à chaque voie (figure 5)

Cette méthode suppose que les télescopes TA et TB disposent d'un plan focal intermédiaire accessible. Comme il est géométriquement conjugué avec le plan focal final, un diaphragme de champ disposé dans le plan focal intermédiaire permet de délimiter physiquement le champ de vue effectif de chacun des télescopes. On peut, dans ces conditions, faire en sorte qu'une colonne de sites CCD soit active pour un seul des télescopes seulement et déterminer à travers quel télescope tout objet traversant le champ commun est vu.

Sur la figure 5, qui est une vue du plan focal final, le principe mis en oeuvre est illustré dans le cas d'un petit nombre de détecteurs CCD correspondant chacun à un carré. Les diaphragmes de détecteurs des télescopes TA et TB sont tels que la première colonne 24 de sites n'est active que pour le télescope TA, tandis que la dernière colonne 26 ne l'est que pour le télescope TB. Les colonnes du centre (zone Z) sont actives pour les deux télescopes et constituent le plan focal commun. Une étoile traversant le champ et détectée par la première colonne 24 est nécessairement vue à travers le télescope TA. Inversement, une étoile détectée dans le plan focal commun mais non détectée par la première colonne sera nécessairement vue à travers le télescope TB. Le même raisonnement s'applique à la dernière colonne 26 de détecteurs CCD. Une seule des deux colonnes extrêmes suffit à discerner les télescopes.

### 2. Une deuxième méthode effectue une discrimination par rotation d'image (figures 6 et 7)

Cette méthode implique de replier les faisceaux de façon que les images du ciel à travers les télescopes TA et TB subissent une rotation différentielle dans le plan de l'image, les plans focaux restant superposés. A titre d'exemple, comme la combinaison de deux symétries planes est une rotation dont l'axe est défini par l'intersection des deux plans, on peut obtenir l'effet recherché en orientant convenablement les miroirs pupillaires MP des télescopes TA et TB et en disposant un miroir commun entre les miroirs pupillaires et le plan focal. Dans ces conditions, les images des trajectoires des étoiles dans le plan focal dépendent du télescope et on pourra déterminer à travers quel télescope une étoile traversant le champ commun a été observée.

La figure 6, qui est une vue dans le plan focal final, correspond à un montage tel que le repliement des faisceaux génère une légère rotation différentielle et contrôlée des images produites par chaque télescope, très exagérée sur la figure. Comme l'indique la figure 7, les mouvements d'une étoile dans le plan focal seront alors différents pour les deux télescopes (comme indiqué par les lignes en traits pleins et en tirets) et permettent de discriminer celui des télescopes qui forme l'image. En pratique, un décalage différentiel d'un pixel (voire même d'une fraction de pixel) après la traversée de l'ensemble du plan focal commun est suffisant pour discriminer les télescopes. La dégradation de la résolution est négligeable, même en mode TDI, car le bougé relatif à un seul site CCD sera inférieur à 1/20^{ème} de pixel dans le sens perpendiculaire au défilement.

On donnera maintenant un exemple de disposition des différents éléments concernés par l'invention d'un instrument à deux télescopes n'utilisant que des miroirs.

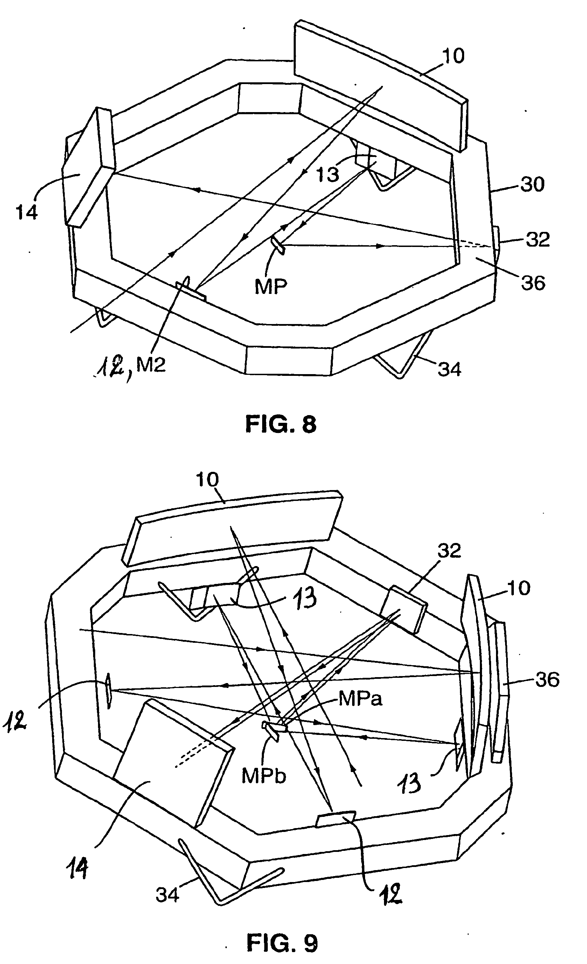

Pour plus de clarté, un seul des télescope est représenté sur la figure 8. Il est monté sur une structure en anneau 30, suffisamment rigide pour être indéformable, en un matériau à faible coefficient de dilatation et à forte conduction thermique, par exemple en carbure de silicium, de façon à garantir la stabilité et la qualité optique de l'ensemble dans l'environnement spatial. Seul le rayon principal est représenté.

Le miroir d'entrée 10 du télescope présente une forme allongée dans le sens circonférentiel de l'anneau et il est porté par une fraction droite de la structure 30. Le faisceau convergent de sortie du miroir est renvoyé vers l'axe de la surface dont le miroir hors d'axe 10 constitue une fraction, de façon que le miroir convexe 12 ne provoque pas une obturation centrale. Le miroir concave 13, porté par la même fraction de la structure que le miroir 10, fournit en sortie un pinceau étroit : le miroir pupillaire Mp est placé sensiblement sur la pupille de sortie. Au lieu d'orienter directement le faisceau vers le plan focal 14, il l'envoie sur un nouveau miroir de repliement 32 qui forme l'image dans le plan focal 14.

Des éléments de support et de montage sont prévus, tels que des bielles 34 en titane et des éléments de renforcement, par exemple des équerres de supportage de la structure 36. Le miroir pupillaire Mp peut être fixé à la structure 30 par un treillis de barres non représenté.

La figure 9 montre l'ensemble des deux télescopes, vu sous un angle différent de celui de la figure 8. Le miroir plan de renvoi 32 est commun aux faisceaux des deux télescopes. Les miroirs pupillaires MPa et MPb sont décalés l'un par rapport à l'autre suivant leur petite dimension.

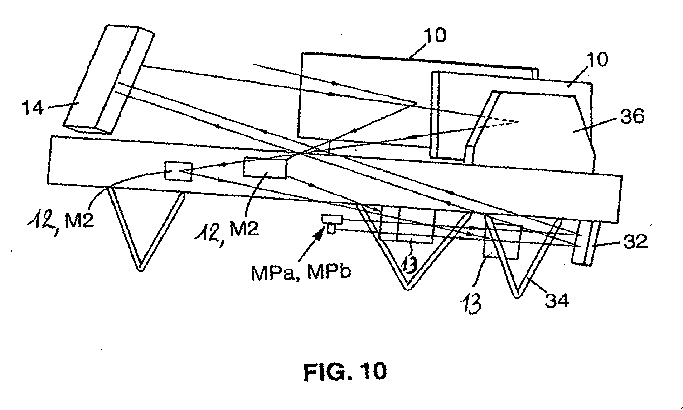

La disposition relative des rayons principaux des deux télescopes apparaît mieux sur la figure 10, où les rayons principaux d'un des télescopes sont indiqués en trait plein et ceux de l'autre télescope indiqués en tirets. On y voit le décalage en translation des rayons principaux des deux télescopes dans le plan focal.
De nombreuses variantes de réalisation sont possibles. Par exemple il est possible d'appliquer le concept général dans un espace intermédiaire et non dans la pupille de sortie. Dans ce cas, les derniers miroirs de renvoi qui sont communs peuvent ne pas être plans et avoir pour fonction de ré-imager le plan focal commun sur le plan focal final, où les détecteurs CCD seraient physiquement disposés.
Le système est alors constitué de deux sous ensembles qu'on peut qualifier de A et B.
La séparation n'est plus faite dans la pupille de sortie de l'ensemble (A+B). Le sous-ensemble A est constitué de deux télescopes TA et TB avec un plan focal commun, mais il n'y a pas de détecteurs dans le plan focal commun de A.B ré-image le plan focal de A sur les détecteurs.

## Revendications

1. l'instrument d'optique destiné à être utilisé sur satellite et permettant d'observer simultanément ou quasi-simultanément dans deux directions angulairement séparées, comprenant :
- au moins deux télescopes (TA, TB) ayant des directions d'observation angulairement écartées, ayant chacun une pupille de sortie ou une pupille intermédiaire réelle et accessible et des champs images respectifs plans ou superposables, de largeur au moins 3 fois supérieure à celle de la pupille dans une direction déterminée ;
- des moyens optiques placés à la pupille de sortie ou intermédiaire et disposés-de.façon à former les champs images dans un plan focal commun (14) en recouvrement sauf dans des zones latérales dont la largeur est sensiblement celle de la pupille de sortie des télescopes ; et
- dans le plan focal commun (14), un ensemble de plusieurs détecteurs matriciels, disposés et orientés sur la zone de superposition des champs images des télescopes dans le front d'onde.

2. Instrument suivant la revendication 1, **caractérisé en ce que** les moyens optiques sont constitués de deux miroirs, situés sur les pupilles de sortie des deux télescopes ou dans leur voisinage, orientés pour superposer les deux champs image en formant des fronts d'onde superposés.

3. Instrument suivant la revendication 1 ou 2, **caractérisé en ce qu'**il comporte deux trains de miroirs de renvoi plans, situés entre la sortie des télescopes (TA , TB) et leurs pupilles de sortie respectives, rapprochant les pupilles de sortie des deux télescopes tout en les maintenant disjointes.

4. Instrument suivant la revendication 1, 2 ou 3, **caractérisé par** un train supplémentaire de miroirs de renvoi, pouvant être commun aux deux télescopes, disposé entre les pupilles de sorties et les champs image superposés pour faciliter l'aménagement mécanique de l'instrument.

5. Instrument suivant l'une quelconque des revendications précédentes, **caractérisé en ce que** des filtres optiques sont disposés sur les chemins optiques séparés ou le chemin optique commun des télescopes.

6. Instrument suivant l'une quelconque des revendications précédentes, **caractérisé par** un obturateur, placé sur une voie optique ou sur les deux pour désactiver l'une des voies de mesure ou les deux.

7. Instrument suivant l'une quelconque des revendications précédentes, **caractérisé en ce que** les détecteurs matriciels sont du type à Transfert de Charges et sont commandés pour fonctionner en mode TDI compensant le défilement de la scène observée par chaque télescope, les deux télescopes ayant la même distance focale.

8. Instrument suivant l'une quelconque des revendications précédentes, **caractérisé en ce que** Les télescopes sont constitués de miroirs, de dioptres ou d'une combinaison des deux, optimisés chacun dans un champ étendu, observant dans deux directions ayant un écart ajustable et conçus de sorte que les pupilles de sorties puissent être rendues voisines l'une de l'autre lorsque les champs images sont superposés.

9. Instrument suivant la revendication 1 , monté sur un satellite pour observer des objets ponctuels simultanément et continuellement à travers les deux télescopes, comprenant un plan focal intermédiaire réel et accessible pour au moins un premier (TA) des deux télescopes, ayant de plus un dispositif permettant de reconnaître le télescope actif pour chaque objet détecté dans le plan focal commun.

10. Instrument suivant la revendication 9, **caractérisé en ce que** le dispositif comporte :
- ou bien au moins un détecteur matriciel supplémentaire disposé dans le plan focal intermédiaire du premier télescope (TA), hors de la zone de recouvrement, et détectant systématiquement tous les objets qui traversent le champ commun,
- ou bien un ensemble comprenant un diaphragme de champ disposé dans le plan focal intermédiaire du premier télescope de manière à délimiter physiquement le champ commun dans ce plan focal intermédiaire,; au moins un détecteur matriciel supplémentaire disposé dans le plan focal final hors de la zone commune, de telle manière qu'il ne soit pas actif pour le premier télescope et que tout objet détecté dans le plan focal commun à travers le second télescope traverse obligatoirement le ou un des détecteurs supplémentaires.

11. Instrument suivant une quelconque des revendications 1 à 10, monté sur un satellite pour observer des objets ponctuels simultanément et continuellement à travers les deux télescopes, ayant de plus un dispositif permettant de reconnaître le télescope actif pour chaque objet détecté dans le plan focal commun.

12. Instrument suivant la revendication 11, **caractérisé en ce que** le dit dispositif détermine le télescope actif à partir des trajectoires des images des objets dans le plan focal.

## Claims

1. An optical instrument designed to be used on a satellite and allowing simultaneous or virtually simultaneous observations to be made in two angularly separated directions, comprising:
- at least two telescopes (TA, TB) having angularly separated observation directions, each having an exit pupil or a real and accessible intermediate pupil and respective plane or superimposable image fields, of width at least 3 times larger than that of the pupil in a given direction;
- optical means placed at the exit or intermediate pupil and disposed so as to form the image fields overlapping in a common focal plane (14) except in lateral regions whose width is substantially that of the exit pupil of the telescopes; and
- in the common focal plane (14), an assembly of two or more matrix detectors, disposed and oriented on the superimposed region of the image fields of the telescopes in the wavefront.

2. The instrument as claimed in claim 1, **characterized in that** the optical means consist of two mirrors, situated on, or in the neighborhood of, the exit pupils of the two telescopes, oriented in order to superimpose the two image fields by forming superimposed wavefronts.

3. The instrument as claimed in either of claims 1 and 2, **characterized in that** it comprises two sets of plane folding mirrors, situated between the exit of the telescopes (TA, TB) and their respective exit pupils, bringing together the exit pupils of the two telescopes while still keeping them separate.

4. The instrument as claimed in any one of claims 1, 2 or 3, **characterized by** an additional set of folding mirrors, which may be common to both telescopes, disposed between the exit pupils and the superimposed image fields in order to facilitate the mechanical layout of the instrument.

5. The instrument as claimed in any one of the preceding claims, **characterized in that** optical filters are disposed in the separate optical paths or the common optical path of the telescopes.

6. The instrument as claimed in any one of the preceding claims, **characterized by** a shutter, placed in one or both optical channels in order to deactivate one or both of the measurement channels.

7. The instrument as claimed in any one of the preceding claims, **characterized in that** the matrix detectors are of the charge coupled device (CCD) type and are controlled to operate in TDI mode which compensates for the continuous displacement of the scene observed by each telescope, both telescopes having the same focal length.

8. The instrument as claimed in any one of the preceding claims, **characterized in that** the telescopes consist of mirrors, lenses or a combination of both, each optimized over an extended field, observing in two directions having an adjustable difference and designed such that the exit pupils can be brought near to one another when the image fields are superimposed.

9. The instrument as claimed in claim 1, mounted on a satellite for observing point-like objects simultaneously and continuously through the two telescopes, comprising a real and accessible intermediate focal plane for at least a first (TA) of the two telescopes, additionally having a device allowing the active telescope to be recognized for each object detected in the common focal plane.

10. The instrument as claimed in claim 9, **characterized in that** the device comprises:
- either at least one additional matrix detector disposed in the intermediate focal plane of the first telescope (TA), outside of the overlap region, and systematically detecting all the objects crossing the common field,
- or an assembly comprising a field diaphragm disposed in the intermediate focal plane of the first telescope so as to define the physical limits of the common field in this intermediate focal plane, at least one additional matrix detector disposed in the final focal plane outside of the common region, such that it is not active for the first telescope and that any object detected in the common focal plane through the second telescope necessarily crosses the or one of the additional detectors.

11. The instrument as claimed in any one of claims 1 to 10, mounted on a satellite for observing point-like objects simultaneously and continuously through both telescopes, additionally having a device allowing the active telescope to be recognized for each object detected in the common focal plane.

12. The instrument as claimed in claim 11, **characterized in that** said device determines the active telescope from the trajectories of the images of the objects in the focal plane.

## Patentansprüche

1. Optisches Instrument, das zur Verwendung auf einem Satelliten bestimmt ist und ermöglicht, gleichzeitig oder fast gleichzeitig Beobachtungen in zwei winkelmäßig getrennte Richtungen vorzunehmen, umfassend:
- mindestens zwei Teleskope (TA, TB), welche Beobachtungsrichtungen aufweisen, die winkelmäßig auseinander liegen, die jeweils eine Austrittpupille oder eine reelle und zugängliche Zwischenpupille und jeweilige ebene oder überlagerbare Bildfelder aufweisen, mit einer Weite, die mindestens dreimal so groß wie diejenige der Pupille in eine bestimmte Richtung ist;
- optische Mittel, die an der Austritts- oder Zwischenpupille platziert sind und dergestalt angeordnet sind, dass sie die Bildfelder in einer gemeinsamen überlappenden Fokalebene (14) außer in Seitenbereichen bilden, deren Weite im Wesentlichen derjenigen der Austrittspupille der Teleskope entspricht; und
- in der gemeinsamen Fokalebene (14), eine Einheit von mehreren Matrixdetektoren, die an der Wellenfront an dem Überlagerungsbereich der Bildfelder der Teleskope angeordnet und auf ihn ausgerichtet sind.

2. Instrument nach Anspruch 1, **dadurch gekennzeichnet, dass** die optischen Mittel aus zwei Spiegeln bestehen, die sich an den Austrittspupillen der beiden Teleskope oder in deren Nähe befinden, und die ausgerichtet sind, um die beiden Bildfelder zu überlagern, indem überlagerte Wellenfronten gebildet werden.

3. Instrument nach Anspruch 1 oder 2, **dadurch gekennzeichnet, dass** es zwei Sätze ebene Umlenkspiegel umfasst, die sich zwischen dem Ausgang der Teleskope (TA, TB) und ihren jeweiligen Austrittspupillen befinden, wodurch die Austrittspupillen der beiden Teleskope aneinander angenähert werden, wobei sie gleichzeitig voneinander getrennt gehalten werden.

4. Instrument nach Anspruch 1, 2 oder 3, durch einen zusätzlichen Satz Umlenkspiegel **gekennzeichnet**, den beide Teleskope gemeinsam nutzen können, der zwischen den Austrittspupillen und den überlagerten Bildfeldern angeordnet ist, um die mechanische Anordnung des Instruments zu erleichtern.

5. Instrument nach irgendeinem der vorhergehenden Ansprüche, **dadurch gekennzeichnet, dass** optische Filter in den getrennten Lichtwegen oder in dem gemeinsamen Lichtweg der Teleskope angeordnet sind.

6. Instrument nach irgendeinem der vorhergehenden Ansprüche, durch einen Verschluss **gekennzeichnet**, der in einem optischen Kanal oder in beiden platziert ist, um einen der Messkanäle oder beide zu deaktivieren.

7. Instrument nach irgendeinem der vorhergehenden Ansprüche, **dadurch gekennzeichnet, dass** die Matrixdetektoren von der ladungsgekoppelten Art und dergestalt gesteuert sind, dass sie in der TDI-Betriebsart funktionieren, die das Ablaufen der von jedem Teleskop beobachteten Szene kompensiert, wobei die beiden Teleskope dieselbe Brennweite aufweisen.

8. Instrument nach irgendeinem der vorhergehenden Ansprüche, **dadurch gekennzeichnet, dass** die Teleskope aus Spiegeln, aus Dioptern oder aus einer Kombination der beiden aufgebaut sind, welche jeweils in einem ausgedehnten Feld optimiert sind, die Beobachtungen in zwei Richtungen vornehmen, die einen einstellbaren Abstand aufweisen, und die dergestalt aufgebaut sind, dass die Austrittspupillen einander benachbart angeordnet werden können, wenn die Bildfelder überlagert sind.

9. Instrument nach Anspruch 1, das auf einem Satelliten angebracht ist, um punktförmige Objekte gleichzeitig und kontinuierlich durch die beiden Teleskope hindurch zu beobachten, das für mindestens ein erstes (TA) der beiden Teleskope eine reelle und zugängliche Zwischenfokalebene umfasst, das darüber hinaus eine Vorrichtung aufweist, die es ermöglicht, das aktive Teleskop für jedes in der gemeinsamen Fokalebene erfasste Objekt zu erkennen.

10. Instrument nach Anspruch 9, **dadurch gekennzeichnet, dass** die Vorrichtung umfasst:
- entweder mindestens einen zusätzlichen Matrixdetektor, der in der Zwischenfokalebene des ersten Teleskops (TA), außerhalb des Überlappungsbereichs, angeordnet ist und systematisch alle Objekte erfasst, die das gemeinsame Feld queren,
- oder eine Einheit, die eine Bildfeldblende umfasst, die in der Zwischenfokalebene des ersten Teleskops derart angeordnet ist, dass das gemeinsame Feld in dieser ersten Zwischenfokalebene physisch beschränkt wird; mindestens einen zusätzlichen Matrixdetektor, der in der Endfokalebene dergestalt außerhalb des gemeinsamen Bereichs angeordnet ist, dass er nicht für das erste Teleskop aktiv ist, und dass jedes in der gemeinsamen Fokalebene durch das zweite Teleskop hindurch erfasste Objekt zwingendermaßen den oder einen der zusätzlichen Detektoren quert.

11. Instrument nach irgendeinem der Ansprüche 1 bis 10, das auf einem Satelliten angebracht ist, um punktförmige Objekte gleichzeitig und kontinuierlich durch die beiden Teleskope hindurch zu beobachten, außerdem eine Vorrichtung aufweisend, die es ermöglicht, das aktive Teleskop für jedes in der gemeinsamen Fokalebene erfasste Objekt zu erkennen.

12. Instrument nach Anspruch 11, **dadurch gekennzeichnet, dass** die Vorrichtung das aktive Teleskop ausgehend von den Bildbahnen der Objekte in der Fokalebene bestimmt.
